# EUROPÄISCHE PATENTSCHRIFT

(11) **EP 0 435 164 B1**
(45) Veröffentlichungstag und Bekanntmachung des Hinweises auf die Patenterteilung: **04.05.1994**
(21) Anmeldenummer: 90124887.2
(22) Anmeldetag: 20.12.1990
(51) Int. Cl.: B41F 13/00, B41L 29/18

(54) **Drehübertrager zur Einführung von Druckluft in ein sich drehendes Teil einer Druckmaschine**
Rotating transformer for the introduction of compressed air into a rotating part of a printing machine
Transformateur rotatif pour introduire de l'air comprimé dans une partie de machine à imprimer en rotation

(30) Priorität: 27.12.1989 DE 3943119
(43) Veröffentlichungstag der Anmeldung: 03.07.1991
(73) Patentinhaber: MAN Roland Druckmaschinen AG, 63012 Offenbach (DE)
(72) Erfinder: Herold, Manfred, W-8756 Kahl /Main (DE); Rebel, Herbert, W-6054 Rodgau 3 (DE)

(56) Entgegenhaltungen:
- EP-A- 0 298 238
- DE-A- 3 309 815
- US-A- 4 552 069

## Beschreibung

Die Erfindung betrifft einen Drehübertrager zur Einführung von Druckluft in ein sich drehendes Teil gemäß dem Oberbegriff des ersten Patentanspruches.

Die Verwendung von Druckluft in den Zylindern von Druckmaschinen ist beispielsweise aus der EP-0 298 238 A2 bekannt. Die Druckluft wirkt dort kraftverstärkend über einen pneumatischen Membranzylinder auf hydraulische Arbeitszylinder, durch welche das Aufspannen einer Druckplatte auf dem Formzylinder einer Bogen-Rotations-Tiefdruckmaschine bewirkt wird. Die Zufuhr der Druckluft in diesem Zylinder erfolgt dabei über einen Drehübertrager axial an dessen Zapfen.

Drehübertrager der Gattung von Anspruch 1 sind aus Katalog 777D, 1977, "Rotating Unions" der Fa. Deublin bekannt. Die in dieser Schrift gezeigten Drehübertrager bestehen aus einem als Welle ausgeführten Rotor, der mit einem Ende beispielsweise an die Stirnfläche des Zapfens eines sich drehenden Teils angeflanscht ist, so daß seine Drehachse mit der des sich drehenden Teils zusammenfällt. Auf der Rotorwelle ist eine Gehäusebuchse gelagert, ferner sind zwischen Rotorwelle und Innenbohrung der Gehäusebuchse Dichtkörper derartig angeordnet, daß pro zu übertragenden Druckluftkanal eine ringförmige Kammer gebildet wird. Durch Anschlußbohrungen in der Gehäusebuchse sind diese Kammern mit Druckluft beaufschlagbar, durch Bohrungen in Rotorwelle und Rotor ist die so in die Kammern eingeleitete Druckluft in das sich drehende Teil weiterleitbar. Eine insbesondere auf Seite 34 dieser Schrift gezeigte Anordnung besteht aus Rotorwelle, Gehäusebuchse und zwei radial beabstandeten Gleitlagern nebst unter Federvorspannung stehenden O-Ringen.

Nachteilig bei diesen Drehübertragersystemen sind die gerade bei mehrkanaligen Ausführungen ausladenden Bauformen, ferner die recht aufwendigen Dichtungsanordnungen. Gerade im letzt genannten Fall ist die Verwendung von Gleitlagern und O-Ringen zur Lagerung und Dichtung ungünstig, da die Gleitlager eine bestimmte Passung verlangen und so bereits ohne Druckluftübertragung Reibmomente zwischen Gehäusebuchse und Rotor entstehen. Dies ist besonders nachteilig, wenn die Übertragung von Druckluft überwiegend in Stillstand bzw. im Langsamlauf erfolgt.

Aufgabe der Erfindung ist es, einen Eingangs spezifizierten Drehübertrager derartig auszubilden, daß die Reibmomente gerade bei druckluftfreiem Betrieb minimal sind und ein insbesondere mehrkanaliger Drehübertrager eine besonders kompakte Bauform ergibt.

Gelöst wird die Aufgabe durch einen Drehübertrager entsprechend dem Kennzeichen des ersten Patentanspruches. Weiterbildungen der Erfindungen ergeben sich aus den Unteransprüchen.

Die Erfindung wird nachstehend an einem Ausführungsbeispiel näher erläutert. In der zugehörigen Zeichnung zeigt:
- Fig. 1: einen Drehübertrager angebracht am Zapfen des Zylinders einer Druckmaschine.
- Fig. 2: einen Schnitt in Achsrichtung durch einen Drehübertrager.
- Fig. 3: eine 6-Kanal-Ausführung des Drehübertragers.
- Fig. 4: einen Schnitt senkrecht zur Achse des Drehübertragers nach Fig. 3.

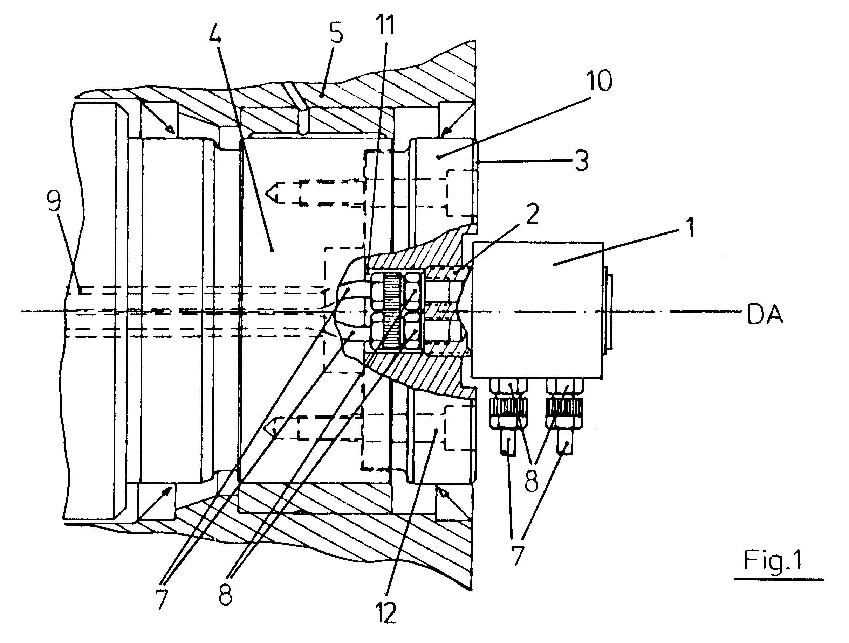

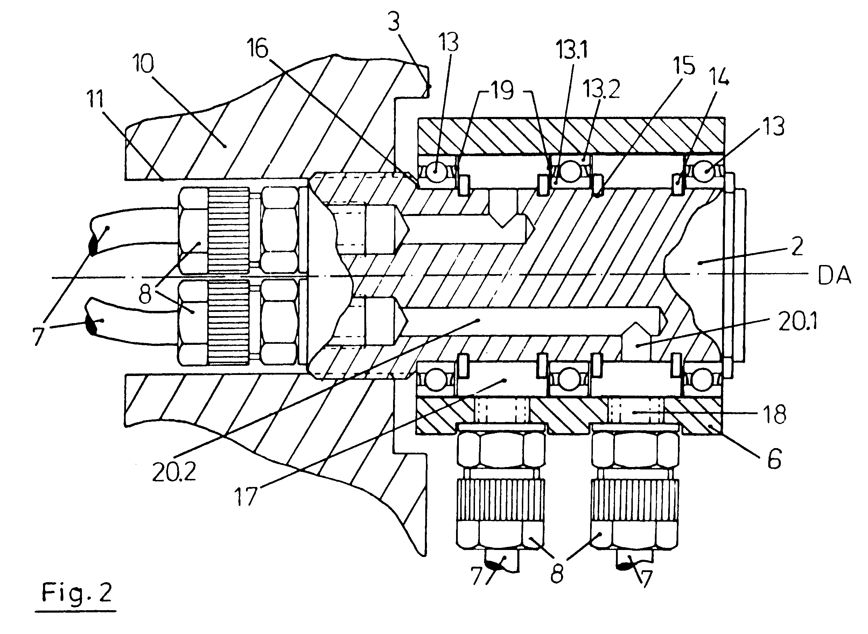

Zur Versorgung mit Druckluft von einem oder mehreren Verbrauchern im Zylinder einer Druckmaschine ist ein Drehübertrager 1 mit seinem Rotor 2 an der Stirnfläche 3 eines Zapfens 4 des Druckmaschinenzylinders angebracht, wobei die Drehachse DA des Zylinders mit der Achse des Rotors 2 zusammenfällt. Wie in Fig. 1 angedeutet wird dabei der Zylinder mit seinem Zapfen 4 in einem Lager 5 in der Gestellwand der Druckmaschine geführt. Die Zufuhr von Druckluft in die sich nicht mit drehende, also in fester Winkelorientierung zum Gestell verbleibende Gehäusebuchse 6 des Drehübertragers 1 erfolgt durch Druckleitungen 7, beispielsweise Druckschläuchen, die mit Verschraubungen 8 an der Gehäusebuchse angeschlossen sind (Fig. 2). Im weiterhin beschriebenen Ausführungsbeispiel handelt es sich um einen 2-kanaligen Drehübertrager, wie aus den zwei Druckleitungen 7 ersichtlich (Fig. 1 und 2).

An dem in die Stirnfläche 3 eingelassenen Ende des Rotors 2 sind zwei Verschraubungen 8 parallel zur Drehachse DA nebeneinander liegend angebracht, so daß über Druckleitungen 7 die so in den Zapfen 4 übertragene Druckluft zu dem oder den Verbrauchern im Zylinder zuführbar ist. Der Zapfen 4 weist dabei vorzugsweise zentrisch zur Drehachse DA eine Bohrung 9 auf, durch welche die Druckleitungen 7 gelegt sind (Fig. 1).

Eine besonders vorteilhafte Art der Anbringung des Drehübertragers 1 bzw. dessen Rotors 2 an der Stirnfläche 3 des Zapfens 4 ergibt sich, wenn das die Stirnfläche 3 bildende Ende des Zapfens 4 als eine am Zapfen 4 angebrachte Scheibe 10 ausgebildet ist. Rotor 2 ist dann mit einem Ende in eine zentrisch zur Drehachse DA ausgeführte Bohrung 11 eingelassen, wobei beispielsweise das Ende von Rotor 2 und die Bohrung 11 ein entsprechendes Gewinde aufweisen. Scheibe 10 kann ihrerseits mittels Schrauben 12 am Zapfen 4 befestigt sein (Fig. 1).

Der mit seinem Ende am Zapfen 4 bzw. an der am Zapfen 4 befestigten Scheibe 10 angebrachte Rotor 2 ist in seiner Weiterführung als Welle ausgeführt (Fig. 2). Im beschriebenen Ausführungsbeispiel sind auf dem Rotor 2 axial beabstandet drei gleiche Rillenkugellager 13 aufgezogen. Der axiale Sitz dieser Rillenkugellager 13 auf der Welle von Rotor 2 ergibt sich einerseits durch die Passung der Innenringe 13.1, andererseits ist jedem Rillenkugellager 13 zusätzlich ein Paar von Sicherungsringen 14 zugeordnet, die, wie in Zeichnung 2 und 3 gezeigt, in entsprechenden Ringnuten 15 der Welle von Rotor 2 sitzen. Rotor 2 weist an seinem in Scheibe 10 befestigten Ende einen größeren Durchmesser auf, so daß der Übergang von seinem Ende zur Welle eine Schulter 16 bildet, an welcher sich der Innenring 13.1 des ersten Rillenkugellagers 13 abstützt.

Auf die Außenringe 13.2 ist ebenfalls mit Passung die Gehäusebuchse 6 des Drehübertragers 1 aufgezogen. So entstehen, jeweils begrenzt durch die Rillenkugellager 13, sowie die Außen- bzw. Innenflächen der Welle des Rotors 2 und der Gehäusebuchse 6 ringförmige Kammern 17. An der Gehäusebuchse 6 sind über Verschraubungen 8 Druckleitungen 7 in Bohrungen 18 angeschlossen. Beide Kammern 17 sind so mit Druckluft beaufschlagbar.

Damit die Druckluft in der jeweiligen Kammer 17 nicht durch die Rillenkugellager 13 entweichen kann, sind zwischen den Rillenkugellager 13 und den jeweiligen Sicherungsringen 14 Dichtscheiben 19 angeordnet, die plan an den seitlichen Anlageflächen des Innen- und Außenringes 13.1, 13.2 des Rillenkugellagers 13 anliegen und sich bei Druckbeaufschlagung der Kammern 17 dichtend an diese anlegen.

Die Dichtscheiben 19 können dabei als dünne gehärtete Stahlscheiben ausgeführt sein. In besonders vorteilhafter Weise empfiehlt sich eine Kunststoffausführung der Dichtscheiben 19. Als Material käme dabei Polyoxymethylen (POM) in Frage, welches beispielsweise unter dem Handelsnamen "Delrin" bekannt ist. Eine solche Kunststoffausführung ergibt ein besonders günstiges Dicht- und Gleitverhalten an den seitlichen Anlageflächen der Innen- bzw. Außenringe 13.1, 13.2.

Die Stärke der Dichtscheiben 19 zwischen Sicherungsring 14 und Innenring 13.1 kann so bemessen sein, daß die Dichtscheibe 19 dadurch geklemmt ist, also unter Druck nur am Außenring 13.2 gleitet und dementsprechend dichtet. Selbstverständlich können die Sicherungsringe 14 auch in entsprechenden Ringnuten 15 der Gehäusebuchse 6 sitzen und über die Außenringe 13.2 die Rillenkugellager 13 axial führen sowie entsprechend die Dichtscheiben 19 am Außenring 13.2 klemmen. Diese gleiten und dichten dann unter Druckbeaufschlagung an dem jeweiligen Innenring 13.1. Vorteilhafter Weise sind die Wälzbereiche der Rillenkugellager 13 dicht abgeschlossen und besitzen eine dauerhafte Fettpackung.

Die Erfindung beschränkt sich nicht nur auf Rillenkugellager, andere Wälzlagertypen können ebenfalls für den Drehübertrager verwendet werden. Die Verwendung von Rillenkugellagern ist jedoch vorteilhaft, da diese besonders einfach und robus aufgebaut sind sowie die Gehäusebuchse 6 axial sicher auf der Welle des Rotors 2 führen.

Damit die in die Kammern 17 eingeleitete Druckluft über Rotor 2 in den Zapfen 4 weiterleitbar ist, weist die Welle des Rotors 2 pro Kammer 17 eine kurze Bohrung 20.1 in radialer Richtung auf, die auf jeweils eine Bohrung 20.2 mit entsprechender Länge in achsparalleler Richtung trifft. Diese achsparallele Bohrungen 20.2 leiten die Druckluft in der Welle des Rotors 2 bis zu dem in der Scheibe 10 sitzenden Ende von Rotor 2 und über die dort angebrachten Verschraubungen 8 in die Druckleitungen 7. Im Anschlußbereich der Verschraubungen 8 sind die Bohrungen 20.2 aufgeweitet und weisen wie die Bohrungen 18 mit den Verschraubungen 8 dichtende Gewinde auf (Fig. 2).

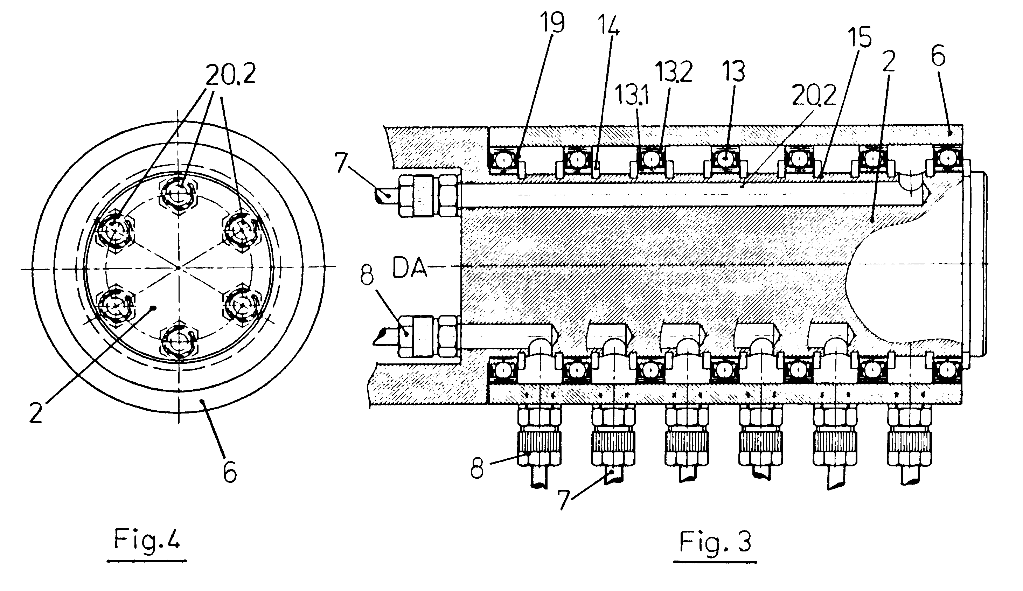

Besonders vorteilhaft baut der Drehübertrager nach Art der Erfindung, wenn er zur Einleitung von mehreren Druckluftkanälen ausgeführt ist. Fig. 3 zeigt eine 6-Kanal-Ausführung.

Entsprechend der zu übertragenden Druckluftkanäle wurde der Rotor 2 bzw. dessen Welle und die Gehäusebuchse 6 verlängert, sowie weitere Rillenkugellager 13 mit der entsprechenden Zahl von Sicherungsringen 14 und Dichtscheiben 19 aufgezogen. In diesem Ausführungsbeispiel sind die Verschraubungen 8 zum Anschluß der Druckleitungen 7 an der Gehäusebuchse 6 in einer Ebene der Drehachse angebracht. Die Verschraubungen 8 am Ende des Rotors 2 sowie die achsparallelen Bohrungen 20.2 in entsprechender Länge sind in symmetrischer Weise in Form eines 6-Eckes angeordnet (Fig. 4). Die radialen Bohrungen 20.1 weisen demzufolge sternförmig nach außen. Eine solche Anordnung der Bohrungen 20.1, 20.2 in Rotor 2 ist jedoch nicht zwingend.

Der besondere Vorteil eines Drehübertragers für einen, zwei oder mehrere Druckluftkanäle ist jedoch nicht nur der besonders einfache, kompakte Aufbau bestehend aus Rotor 2, Gehäusebuchse 6, Rillenkugellager 13. Sicherungsringen 14 nebst Dichtscheiben 19, sondern auch seine Herstellung (z.B. Bohrungen 18, 20.1, 20.2) sowie der durch den Aufbau bedingte geringe Aufwand bei Zusammenbau bzw. beim Zerlegen.

Da sich die Dichtscheiben 19 nur seitlichen bei Druckluftbeaufschlagung also Übertragung von Druckluft an den Anlageflächen der Rillenkugellager 13 (Innen- bzw. Außenringe 13.1, 13.2) dichtend also mit Kraft anlegen, entstehen zwischen Rotor 2 und Gehäusebuchse 6 im Betrieb ohne Druckluftübertragung nur geringste Reibmomente.

Ein Drehübertrager nach Art der Erfindung eignet sich nicht nur zur Übertragung von Druckluft sondern beispielsweise auch zur Übertragung von Öl zu Schmier- bzw. Kühlzwecken unter Druck in ein sich drehendes Teil.

### Bezugszeichenliste

- 1: Drehübertrager
- 2: Rotor
- 3: Stirnfläche
- 4: Zapfen
- 5: Lager
- 6: Gehäusebuchse
- 7: Druckleitung
- 8: Verschraubung
- 9: Bohrung
- 10: Scheibe
- 11: Bohrung
- 12: Schraube
- 13: Wälzlager/Rillenkugellager
- 13.1: Innenring
- 13.2: Außenring
- 14: Sicherungsring
- 15: Ringnut
- 16: Schulter
- 17: Kammer
- 18: Bohrung
- 19: Dichtscheibe
- 20.1: Bohrung radial
- 20.2: Bohrung achsparallel
- DA: Drehachse

## Patentansprüche

1. Drehübertrager zur Einführung von Druckluft in ein sich drehendes Teil einer Druckmaschine, insbesondere über die Stirnfläche des Zapfens (4) einer Walze oder eines Zylinders, wobei der Drehübertrager (1) aus einem an dem sich drehenden Teil in der Drehachse (DA) angebrachten Rotor (2) sowie einem auf der Welle des Rotors (2) gelagerten Gehäusebuchse (6) besteht, pro zu übertragendem Druckluftkanal zwischen der Welle des Rotors (2) und der Gehäusebuchse (6) durch axial voneinander beabstandete Dichtelemente ringförmige Kammern (17) gebildet werden, in die über Gehäusebohrungen (18) Druckluft leitbar ist und die Weiterleitung der Druckluft dieser Kammern (17) durch Bohrungen (20.1; 20.2) in der Welle des Rotors (2) erfolgt,
**dadurch gekennzeichnet,**
daß die ringförmigen Kammern (17) durch zwei auf der Welle des Rotors (2) sitzende und die Gehäusebuchse (6) lagernde Wälzlager (13) gebildet werden, daß den Wälzlagern (13) Sicherungsringe (14) zugeordnet sind, und daß zwischen Sicherungsringen (14) und den Wälzlagern (13) Dichtscheiben (9) angebracht sind, die sich bei Druckluftbeaufschlagung der Kammer (17) dichtend an die seitlichen Anlageflächen der Innen- und Außenringe (13.1; 13.2) der Wälzlager (13) anlegen.

2. Drehübertrager nach Anspruch 1,
**dadurch gekennzeichnet,**
daß die Wälzlager (13) eine Abdichtung des Wälzbereiches mit dauerhafter Schmierung aufweisen.

3. Drehübertrager nach Anspruch 1 oder 2,
**dadurch gekennzeichnet,**
daß die Dichtscheiben (19) als gehärtete Stahlscheiben ausgeführt sind.

4. Drehübertrager nach Anspruch 1 oder 2,
**dadurch gekennzeichnet,**
daß die Dichtscheiben (19) aus einem Kunststoff gefertigt sind.

5. Drehübertrager nach einem der vorhergehenden Ansprüche,
**dadurch gekennzeichnet,**
daß bei mehrkanaliger Druckluftübertragung zwei benachbarte Kammern (17) durch ein Wälzlager (13) nebst beidseitig angebrachten Dichtscheiben (19) voneinander getrennt sind.

6. Drehübertrager nach einem der vorhergehenden Ansprüche,
**dadurch gekennzeichnet,**
daß die Ableitung der Druckluft der Kammer (17) über entsprechend miteinander verbundene radiale und achsparallele Bohrungen (20.1; 20.2) im Rotor (2) erfolgt.

7. Drehübertrager nach einem der vorhergehenden Ansprüche,
**dadurch gekennzeichnet,**
daß die Stirnfläche (3) durch eine am Zapfen (4) angebrachte Scheibe (10) gebildet ist, die eine Bohrung (11) aufweist, in welche der Rotor (2) von Drehübertrager (1) eingelassen ist.

8. Drehübertrager nach einem der vorhergehenden Ansprüche,
**dadurch gekennzeichnet,**
daß die Wälzlager (13) als Rillenkugellager (13) ausgebildet sind.

## Claims

1. Rotary transformer for introducing compressed air into a rotating part of a printing press, particularly via the end face of the trunnion (4) of a roller or of a cylinder, wherein the rotary transformer (1) consists of a rotor (2) set on the rotating part on the rotational axis (DA) as well as a housing bush (6) mounted on the shaft of the rotor (2), per compressed air channel to be transferred between the shaft of the rotor (2) and the housing bush (6) annular chambers (17) are formed by sealing elements axially spaced from one another, into which compressed air can be fed via bores in the housing (18) and the further feeding of the compressed air of these chambers (17) takes place via bores (20.1, 20.2) into the shaft of the rotor (2), characterised in that the annular chambers (17) are formed by two roller bearings seated on the shaft of rotor (2) and mounting the housing bush (6), that the roller bearings (13) have safety rings (14) arranged thereto and that between safety rings (14) and the roller bearings (13) the sealing discs (9) are installed which lie on being subjected to compressed air from the chamber (17) sealingly against the lateral abutment surfaces of the inner and outer rings (13.1; 13.2) of the roller bearing (13).

2. Rotary transformer according to Claim 1,
characterised in that the roller bearing (13) has sealing of the rolling area with permanent lubrication.

3. Rotary transformer according to Claim 1 or 2,
characterised in that the sealing discs (19) are constructed as hardened steel discs.

4. Rotary transformer according to Claim 1 or 2,
characterised in that the sealing discs (19) are prepared from a plastics.

5. Rotary transformer according to one of the preceding Claims, characterised in that with a multi-channel compressed air transfer, two neighbouring chambers (17) are separated from one another via a roller bearing (13) together with sealing discs (19) arranged on both sides.

6. Rotary transformer according to one of the preceding Claims, characterised in that the feeding away of the compressed air from the chamber (17) takes place via radial and axially parallel bores (20.1; 20.2) in the rotor (2) connected correspondingly one with another.

7. Rotary transformer according to one of the preceding Claims, characterised in that the end face (3) is formed by a disc (10) set on the trunnion (4) which has a bore (11) into which the rotor (2) of the rotary transformer (1) is let.

8. Rotary transformer according to one of the preceding Claims, characterised in that the roller bearing (13) is constructed as a deep groove ball bearing (13).

## Revendications

1. Dispositif de transfert rotatif pour introduire de l'air comprimé dans une partie rotative d'une machine d'impression, en particulier par l'intermédiaire de la face frontale du tourillon (4) d'un rouleau ou d'un cylindre, le dispositif de transfert rotatif (1) étant constitué d'un rotor (2) appliqué sur la partie rotative sur l'axe de rotation (DA), ainsi que d'un manchon de boîtier (6) monté sur l'arbre du rotor (2), des chambres annulaires (17) étant formées, pour chaque canal d'air comprimé à transférer, entre l'arbre du rotor (2) et le manchon de boîtier (6), par des éléments d'étanchéité axialement éloignés l'un de l'autre, chambres dans lesquelles l'air comprimé peut être amené par l'intermédiaire de perçages (18) du boîtier, et le transfert de l'air comprimé de ces chambres (17) étant effectué par des perçages (20.1;20.2) dans l'arbre du rotor (2),
caractérisé en ce que les chambres annulaires (17) sont formées par deux roulements (13) s'appuyant sur l'arbre du rotor (2) et supportant le manchon de boîtier (6), en ce que des bagues de sécurité (14) sont associées aux roulements (13), et en ce que des bagues d'étanchéité (19) sont agencées entre les bagues de sécurité (14) et les roulements (13), lesquelles s'appuient de façon étanche contre les surfaces d'appui latérales des bagues internes et externes (13.1;13.2) des roulements (13), lorsque les chambres (17) sont alimentées en air comprimé.

2. Dispositif de transfert rotatif selon la revendication 1,
caractérisé en ce que les roulements (13) présentent une étanchéification de la zone des roulements avec lubrification permanente.

3. Dispositif de transfert rotatif selon la revendication 1 ou 2,
caractérisé en ce que les bagues d'étanchéité (19) sont réalisées en tant que rondelles d'acier durcies.

4. Dispositif de transfert rotatif selon la revendication 1 ou 2,
caractérisé en ce que les bagues d'étanchéité (19) sont fabriquées en une matière synthétique.

5. Dispositif de transfert rotatif selon une des revendications précédentes,
caractérisé en ce que, dans le cas d'un transfert d'air comprimé à plusieurs canaux, deux chambres voisines (17) sont séparées l'une de l'autre par un roulement (13), outre des bagues d'étanchéité (19) agencées des deux côtés.

6. Dispositif de transfert rotatif selon une des revendications précédentes,
caractérisé en ce que la dérivation de l'air comprimé des chambres (17) est effectuée dans le rotor (2) par l'intermédiaire de perçages parallèles à l'axe, radiaux et reliés ensemble de façon correspondante (20.1;20.2).

7. Dispositif de transfert rotatif selon une des revendications précédentes,
caractérisé en ce que la face frontale (3) est formée par un disque (10) appliqué sur le tourillon (4), disque qui présente un perçage (11) dans lequel est monté le rotor (2) du dispositif de transfert rotatif (1).

8. Dispositif de transfert rotatif selon une des revendications précédentes,
caractérisé en ce que les roulements (13) sont réalisés en tant que roulements rainurés à billes (13).
